# FASCICULE DE BREVET EUROPEEN

(11) **EP 1 368 779 B1**
(45) Date de publication et mention de la délivrance du brevet: **09.08.2006**
(21) Numéro de dépôt: 02713024.4
(22) Date de dépôt: 14.03.2002
(51) Int. Cl.: G06K 7/14, G01N 21/55

(54) **SYSTEME DE MARQUAGE ET D'IDENTIFICATION OPTIQUE**
OPTISCHES IDENTIFIZIERUNGS-UND MARKIERUNGSSYSTEM
OPTICAL IDENTIFICATION AND MARKING SYSTEM

(30) Priorité: 15.03.2001 FR 0103554
(43) Date de publication de la demande: 10.12.2003
(73) Titulaire: T.E.B. L.B., F-21590 Santenay (FR)
(72) Inventeur: BIDAULT, Louis, F-21590 Santenay (FR); MUGNIER, Jacques, F-69002 LYON (FR); LE LUYER, Cécile, F-69100 VILLEURBANNE (FR); BONARDI, Nicolas, F-69003 LYON (FR)
(74) Mandataire: Bratel, Gérard
(86) Numéro de dépôt international: PCT/FR2002/000911
(87) Numéro de publication internationale: WO 2002/075638

(56) Documents cités:
- EP-A- 0 478 137
- US-A- 4 704 519
- US-A- 6 002 139
- PATENT ABSTRACTS OF JAPAN vol. 008, no. 171 (P-293), 8 août 1984 (1984-08-08) -& JP 59 066777 A (CANON KK), 16 avril 1984 (1984-04-16)

## Description

La présente invention concerne un système de marquage et d'identification optique, ce système comprenant, d'une part, une marque apposée sur un objet ou un document, ou une marque constituée par tout ou partie de l'objet lui-même, et d'autre part, un dispositif de lecture permettant de reconnaître ladite marque. Ainsi, ce système permet l'authentification et/ou l'identification d'objets et/ou de documents, comprenant une marque optiquement reconnaissable par un dispositif ou appareil de lecture adapté.

Un document ou un objet, notamment au sens d'un produit manufacturé, est par nature imitable ou falsifiable. Dans un but de sécurité, il est souhaitable de protéger documents et objets contre la fraude, l'imitation et les contrefaçons, au moyen de systèmes d'identification et de reconnaissance fiables, non aisément reproductibles, discrets, sécurisés et difficilement falsifiables. A cet effet, on utilise notamment le principe du marquage qui consiste à apposer, sur un objet ou document, une marque ou un code, à caractère distinctif, témoignant de l'authenticité de l'objet ou du document, et susceptible d'être reconnu à l'aide de moyens adaptés.

En ce qui concerne les types de marques actuellement utilisées, il s'agit en général de caractères ou textes directement lisibles (et aisément reproductibles), ou de marques codées nécessitant, pour leur identification, la connaissance d'une clé de décryptage, ou encore de substances possédant une propriété physique remarquable et détectable (par exemple : magnétisme). Plus le système de marquage est complexe et non immédiatement reconnaissable, plus le nombre de contrefaçons potentielles est réduit. Il convient donc de trouver des solutions technologiquement complexes, pour que la reproduction et la lecture de la marque soient rendues extrêmement difficiles au plus grand nombre de personnes, mais restent de mise en oeuvre aisée pour les utilisateurs autorisés.

L'émergence de certaines technologies, liées aux propriétés optiques, fournit dans ce domaine des nouvelles solutions. Par exemple, on connaît l'utilisation de matériaux luminescents généralement nommés luminophores, qui, soumis à une lumière de longueur d'onde donnée, réémettent une lumière dans une autre longueur d'onde. Il est ainsi possible de déposer, sur des objets ou documents, des marques invisibles à l'oeil humain mais révélables sous illumination, dans le domaine du visible ou de l'infrarouge, voire des deux comme exposé dans le document WO 87/06197. Une variante connue consiste à choisir les longueurs d'onde d'excitation et d'émission dans des gammes invisibles à l'oeil humain, comme par exemple le domaine de l'infrarouge - voir par exemple le document WO 92/04192.

Dans de tels systèmes, les marques, avant dépôt, se trouvent sous une forme liquide, et sont parfois difficiles à élaborer pour des raisons de stabilité, de compatibilité chimique des espèces en présence (ce qui est le cas des terres rares ou des molécules luminescentes), ou encore les substances de ces marques ne sont pas totalement solubles et risquent d'obstruer les têtes des systèmes d'impression, utilisés pour apposer les marques sur des objets ou documents. De plus, les matériaux luminophores sont toxiques. Un autre inconvénient majeur de l'utilisation des luminophores est l'influence néfaste du substrat ; lors de l'illumination de la marque, le substrat est aussi excité, et il émet à son tour de la lumière, créant ainsi des perturbations notables avec le signal lumineux attendu. Ce dernier problème rend nécessaire la construction de détecteurs particuliers, comme celui décrit dans le document WO 97/50053, qui propose le principe d'un analyseur par balayage pour la lecture de marques fluorescentes dans le domaine du proche infrarouge.

Enfin, le principe de ces marques optiques, précédemment proposées, repose sur la combinaison d'une matrice hôte et d'une substance présentant des propriétés de luminescence, c'est-à-dire capable de réémettre un signal en réponse à son excitation. Or toute propriété physique, liée à la substance chimique introduite ou révélable, est altérable par principe, ou plus couramment se dégrade dans le temps, ce qui est difficilement acceptable pour des marques ne devant pas être altérées, même après une longue durée, ceci en raison de la nature ou de la valeur des objets ou documents concernés.

La présente invention vise à pallier tous ces inconvénients. A cet effet, elle s'appuie sur la propriété qu'ont certains matériaux transparents ou semi-transparents, à une longueur d'onde donnée, de propager la lumière. Dans certaines conditions, une fraction d'un faisceau de lumière incident est propagée à l'intérieur d'un tel matériau via un prisme, et se trouve ainsi absente de la partie réfléchie. Ce comportement est bien connu dans la technologie des guides d'ondes planaires, dans laquelle on cherche notamment à guider la lumière à l'intérieur des couches minces.

Plus particulièrement, lorsqu'on presse l'un contre l'autre un matériau transparent ou semi-transparent à une longueur donnée et un prisme, il se forme un faible intervalle entre les deux, au point de couplage optique. Cet intervalle peut être constitué d'air, de liquide ou de gaz, ou encore être solide. Un faisceau de lumière notamment monochromatique arrivant sur le prisme étant focalisé, sur le point de couplage, il peut, sous certaines conditions, se produire un passage d'une partie de la lumière dans le matériau par effet tunnel optique, le reste du faisceau étant totalement réfléchi. Un tel comportement, qui a lieu au point de couplage optique, est appelé "réflexion frustrée". Cette injection particulière de modes lumineux est assurée par des ondes évanescentes crées dans l'intervalle entre le prisme et le matériau guidant, les conditions de réussite de la propagation dans ce matériau étant, entre autres : un indice de réfraction du prisme supérieur à celui du matériau, un angle judicieux d'incidence sur le prisme, un faisceau lumineux incident de même polarisation que le mode à exciter, un accord de phase, et un intervalle d'air (ou autre) minimum.

L'étude de la lumière réfléchie par le matériau, sans modification de la longueur d'onde, montre l'absence du/des mode(s) guidé(s), ce qui se traduit par une ou plusieurs ligne(s) noire(s) sur un fond brillant. Traditionnellement, les lignes noires sont utilisées pour calculer l'indice optique et l'épaisseur de couches minces, dans la technologie des guides d'ondes optiques planaires.

Une utilisation connue de ce principe optique, décrite dans le document EP 0478137, concerne le domaine des analyses biologiques et, plus particulièrement, la mise en évidence de la liaison entre antigènes et anticorps par la mesure de la variation de l'indice optique de la solution analysée.

Toutefois, cette utilisation reste très éloignée du domaine du marquage et de l'identification d'objets et/ou de documents, et l'on ne connaît, à ce jour, aucune application de la réflexion frustrée à ce domaine.

La présente invention repose sur la découverte que les lignes noires sont une caractéristique intrinsèque ou "signature" liée à la nature et à la morphologie du matériau. Un tel matériau peut donc constituer une "marque" permettant d'authentifier et/ou d'identifier des objets ou des documents.

Ainsi, l'invention a essentiellement pour objet un système selon la revendication 1

Le choix de telles marques, utilisées avec un dispositif de lecture adapté, présente des avantages importants :

Par principe, la marque est passive, c'est-à-dire qu'elle ne possède pas de propriétés physiques remarquables pouvant être excitées puis détectées, propriétés qui par ailleurs risqueraient d'être altérées dans le temps.

Pour la réalisation de telles marques, il n'est donc pas besoin d'utiliser des molécules actives, en général toxiques, ce qui permet d'envisager leur utilisation sans danger pour le public. Ces marques peuvent être constituées de matériaux connus ou non pour leurs caractéristiques de propagation de la lumière et, préférentiellement, tous les matériaux utilisés comme guides d'ondes. Ces matériaux peuvent être organiques, inorganiques ou hybrides.

La marque peut présenter une surface de l'ordre de quelques millimètres carrés, et une épaisseur de quelques dizaines de nanomètres au minimum, ces faibles dimensions (tant en étendue qu'en épaisseur) la rendant particulièrement discrète.

Au-delà de ces caractères généraux, la marque peut être constituée selon diverses formes de réalisation avantageuses.

La marque peut être continue et uniforme, au moins sur une partie de son étendue. Elle peut aussi présenter au moins une discontinuité locale, comme par exemple une structure en canal.

La marque peut être transparente dans le visible, de manière à ne pas masquer le support recouvert par cette marque. Ainsi, des caractères imprimés sur le support, ou des dessins ou autres motifs, de ce support, ne seront pas masqués et resteront lisibles au travers de la marque, également rendue très discrète par ce moyen.

Selon une autre forme de réalisation, la marque est recouverte d'une couche protectrice et/ou servant de leurre, pouvant être ôtée avant lecture, qui peut être une couche soluble, une couche plastifiée ou tout autre type de couche de protection.

La marque peut contenir un matériau tel que colorant ou luminophore, ou autre agent pouvant en modifier l'aspect et/ou entrer dans la détection ; ce moyen permet de repérer la marque, mais aussi de détourner d'éventuels contrefacteurs de la véritable propriété à analyser.

La marque est aussi modifiable localement, de manière réversible ou irréversible, notamment par voie chimique, physique ou mécanique, en ce qui concerne les propriétés optiques du matériau de cette marque, et plus particulièrement l'indice optique.

Selon un mode de réalisation, la marque est réalisée sous la forme d'une ou plusieurs couches, en particulier sous la forme d'une couche mince, déposée ou fixée sur l'objet ou document à marquer. La marque se présente ainsi sous la forme d'une pastille, transparente ou non, d'une surface de l'ordre de quelques millimètres carrés et d'une épaisseur de quelques dizaines de nanomètres au minimum (comme déjà indiqué plus haut).

Avant dépôt, le matériau de la marque peut se présenter sous forme liquide, ce qui lui permet d'être déposé par exemple par pulvérisation, ou par une technique de "jet d'encre", ou par toutes autres techniques de dépôt de films ou de couches minces. Le dépôt ainsi réalisé peut être soumis à un traitement thermique ou autre, en vue de lui conférer des propriétés de bonne tenue mécanique et structurales, telles que, par exemple, la stabilité dans le temps, la dureté, la résistance aux frottements.

L'information contenue dans la couche déposée étant indépendante du support ou substrat, il est envisageable de déposer la marque sur tous types de supports ou substrats, tels que papiers, métaux, matières plastiques, semi-conducteurs, ou des substrats fonctionnalisés tels que les circuits intégrés, ce qui offre un très large champ d'application pour le système de marquage et d'identification optique selon l'invention. Le dépôt pourra être fait de manière directe sur le substrat, ou encore à part, puis apposé par exemple par collage sur le substrat. Un autre mode d'élaboration consiste à réaliser la marque sous la forme d'un film auto-supporté.

Selon un mode de réalisation particulier, la marque est déposée sur une sous-couche de préparation, notamment un substrat optique, dont l'indice de réfraction est généralement inférieur à celui du matériau constitutif de la marque. Cette sous-couche, ou substrat optique, déposée sur le support avant le dépôt de la couche contenant véritablement l'information, peut être intéressante notamment dans le cas où le support n'est pas transparent à la longueur d'onde de travail.

Selon une autre forme de réalisation, la marque est constituée d'un empilement de couches successives. Un tel empilement permet d'accéder à un nombre plus important de modes propagés, et donc de lignes noires, ce qui permet de disposer d'une plus grande diversité de combinaisons, donc de marques. Dans ce cas, la marque peut être initialement constituée de plusieurs couches, mais il est aussi possible de rajouter une ou plusieurs couches sur une marque pré-existante, pour la modifier si besoin est. Cette dernière possibilité est particulièrement intéressante dans un but de traçabilité, comme témoin de passage d'un objet ou produit dans une chaîne de production, ou de la vente de l'objet, ou pour marquer n'importe quelle étape d'un processus.

Selon un autre mode de réalisation de l'invention, la marque est massive, c'est-à-dire qu'elle présente une épaisseur typiquement comprise entre quelques dizaines et une centaine de micromètres, mais sans qu'aucune limite supérieure d'épaisseur soit imposée. C'est le cas, notamment, d'une marque constituée par tout ou partie de l'objet ou du document lui-même, si cet objet ou ce document est constitué, dans sa totalité ou en partie, d'un matériau dont les caractéristiques intrinsèques permettent la propagation de la lumière. Dans ce cas, la projection de la lumière réfléchie, sur le détecteur, montre une zone sombre correspondant à la fréquence de coupure, c'est-à-dire au continuum des modes guidés par le matériau, ainsi qu'une zone claire. Le repérage angulaire de la frontière entre les deux zones est caractéristique de l'indice optique du matériau, mais aussi du dispositif de lecture (prisme, longueur d'onde de travail, position du détecteur). Une couche colorée non guidante peut être déposée sur le matériau de l'objet ou du document, afin d'induire en erreur d'éventuels contrefacteurs.

Selon un mode d'exploitation de l'invention, la marque est prévue reproductible à l'identique, sur un grand nombre d'objets ou de documents. En d'autres termes, des séries de marques identiques sont apposées sur des objets et/ou des documents, ce qui permet de réaliser un marquage de masse, sur une même série d'objets et/ou de documents.

Selon un autre mode d'exploitation de l'invention, chaque marque est unique, et affectée à un objet ou un document qu'elle caractérise ainsi. Dans ce cas, il est possible de constituer une banque de données dans laquelle sont conservées les caractéristiques des marques, toutes uniques ; l'identification ou authentification de l'objet ou du document se fait par comparaison entre ce que lit le détecteur et les données conservées en mémoire.

Un autre aspect de l'invention concerne le dispositif de lecture de la marque. Selon une forme de réalisation préférée, ce dispositif de lecture comprend, en combinaison :
- au moins une source de lumière, apte à délivrer un faisceau de lumière polarisée ou non,
- un prisme, d'indice de réfraction supérieur à celui de la marque, venant en couplage optique avec la marque, en un point donné,
- des moyens optiques pour diriger et/ou acheminer le faisceau de lumière sur le prisme, au point de couplage optique,
- un détecteur placé pour recevoir la lumière réfléchie après couplage avec la marque.

La ou chaque source de lumière peut être une source monochromatique, telle que laser ou diode laser, délivrant directement le faisceau de lumière monochromatique ou quasi-monochromatique, telle que diode électroluminescente, de longueur d'onde choisie. La ou chaque source de lumière peut aussi être une source polychromatique, éventuellement couplée avec un ou des filtres optiques de bande passante adaptée.

Le faisceau lumineux incident doit être dirigé sur le point de couplage optique, pour permettre aux modes guidés de passer dans la marque. A cet effet les moyens optiques peuvent comprendre des lentilles, dont au moins une lentille convergente précédant le prisme, et éventuellement un système de miroirs. La lentille convergente, précédant le prisme, permet d'avoir plusieurs angles d'incidence simultanés, donc plusieurs modes propagés simultanément, soit plusieurs lignes noires sur le détecteur.

Dans le cas le plus simple, le système comprend une seule source de lumière monochromatique, mais il peut aussi être conçu pour plusieurs sources de lumière monochromatiques fonctionnant simultanément dans le même dispositif de lecture, et avec le même détecteur, ce qui permet de former sur ce détecteur un plus grand nombre de lignes noires, donc un plus grand nombre de codages possibles. Dans le même ordre d'idées, une même source de lumière monochromatique peut être polarisée en mode TE ou TM, par simple action d'un polarisateur, ce qui fournit une possibilité de doubler les informations contenues dans la marque.

La détection du signal renvoyé par la marque peut être simple, c'est-à-dire purement visuelle (sur un écran). Cette détection peut aussi faire appel à des moyens électroniques d'acquisition, de traitement et de mémorisation du signal reçu, auxquels est couplé le détecteur. Dans ce dernier cas, les dispositifs de détection pouvant être utilisés sont, par exemple, ceux connus pour la lecture des codes à barres, ou des photodétecteurs, ou encore une caméra CCD.

Dans une version simplifiée, la lecture se fait par analyse de l'intensité lumineuse reçue. Toute baisse d'intensité est interprétée comme un succès, c'est-à-dire que l'objet ou document est correctement identifié ou authentifié par reconnaissance de sa marque, et le système délivre alors un message de succès.

Dans une version plus complexe, les moyens électroniques peuvent analyser, à partir de la lumière renvoyée après contact avec la marque, un ou plusieurs parmi les paramètres suivants : indice de la marque, épaisseur de la marque, nombre et/ou espacement et/ou positions et/ou largeur des lignes noires ou blanches sur le détecteur, position de la fréquence de coupure, intensité lumineuse moyenne reçue par le détecteur, indice moyen et/ou épaisseur moyenne dans le cas d'une marque multicouches, lignes supplémentaires en cas de présence de luminophores dans la marque. Dans le cas d'un faisceau de lumière polarisée, lesdits moyens électroniques sont aussi prévus pour analyser chaque mode de lumière selon sa polarisation.

Par ailleurs, la nature de la source de lumière, et/ou la nature et/ou la forme géométrique du prisme, et/ou d'autres caractéristiques du dispositif de lecture, sont utilisables comme paramètres de sécurité du système. Autrement dit, une marque ne pourra être lue, et par conséquent considérée comme valide, que par un dispositif de lecture aux caractéristiques techniques précises, ce qui constitue un paramètre de sécurité supplémentaire, pour le système objet de l'invention.

Lors de l'utilisation du dispositif de lecture, et pour que la lecture soit possible, le prisme doit être en contact optique avec la marque. Cette exigence doit être satisfaite par les modes de réalisation pratiques du dispositif de lecture.

Selon un premier mode de réalisation pratique, le dispositif de lecture de la marque est un dispositif portable, conformé en pince dont une mâchoire comporte le prisme et dont l'autre mâchoire comporte, en regard du prisme, un élément permettant le couplage optique entre la marque à analyser, introduite entre les deux mâchoires de la pince, et ledit prisme. La marque à analyser se trouve ainsi serrée entre les mâchoires de la pince.

Selon un autre mode de réalisation pratique, le dispositif de lecture de la marque est un dispositif portable, de forme allongée, dont une extrémité est pourvue du prisme et prévue pour être appliquée sur la marque à analyser. Le contact optique est ici réalisé par simple pression.

Dans un autre genre de réalisation concrète, le dispositif de lecture de la marque est un appareil fixe ou semi-mobile, dans lequel la marque à analyser est introduite, des moyens pouvant être prévus dans cet appareil pour un couplage optique automatique entre le prisme et cette marque. L'objet ou document étant introduit dans l'appareil, un système automatique le guide de manière à amener sa marque au niveau du point de couplage optique, où le couplage peut également être automatisé, par exemple au moyen d'un dispositif pneumatique.

L'invention sera de toute façon mieux comprise à l'aide de la description qui suit, en référence aux dessins schématiques annexés représentant, à titre d'exemple, une forme d'exécution de ce système de marquage et d'identification optique :
La figure 1 représente une marque déposée sur un support, et un dispositif de lecture portatif associé;
La figure 2 illustre l'image obtenue sur le détecteur du dispositif de lecture.

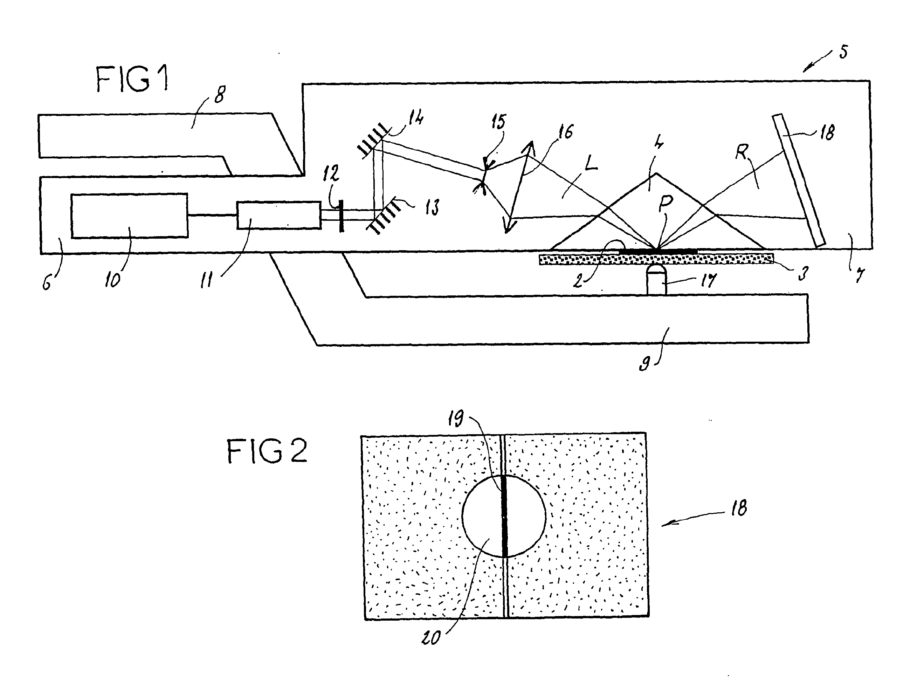

En se référant à la figure 1, un film mince 2 de matériau transparent ou semi-transparent à la longueur d'onde de travail, d'indice optique nf, constituant ici la marque, est déposé sur un support 3 qui correspond à l'objet ou au document marqué. Le support 3, d'indice optique ns inférieur à l'indice nf du film 2, fait office de substrat optique. L'ensemble constitué par la marque 2 et son support 3 est ici prévu pour être amené manuellement en contact optique avec un prisme 4, qui appartient à un dispositif de lecture optique désigné globalement par le repère 5, l'indice optique np du prisme 4 étant supérieur à l'indice nf du film 2. On a donc la relation :
np > nf > ns

Le dispositif de lecture 5 représenté est un dispositif portable, conformé en pince à deux branches articulées entre elles, soit une première branche "fixe" formant une poignée 6 et comportant une mâchoire 7, et une seconde branche "mobile" formant une poignée complémentaire 8 et comportant une autre mâchoire 9, située en regard de la précédente mâchoire 7.

Les composants du dispositif de lecture 5, logés dans la branche "fixe" de la pince, comprennent une alimentation électrique 10 assurant l'autonomie du dispositif, qui alimente une source de lumière 11 délivrant un faisceau de lumière monochromatique, de longueur d'onde, intensité et polarité définies. La source 11 peut être constituée d'un laser, d'une diode laser, ou d'une lampe à filtre, associées à un polariseur 12.

Le prisme 4 étant logé dans la mâchoire 7 de la branche "fixe", en regard de la mâchoire 9 de la branche "mobile" de la pince, le faisceau émis par la source de lumière 11 est dirigé vers le prisme 4 par un ensemble optique qui comprend successivement un premier miroir 13, un deuxième miroir 14, une lentille divergente 15 et une lentille convergente 16. La lentille divergente 15 sert d'expanseur de faisceau. La lentille convergente 16, qui précède directement le prisme 4, est choisie avec pour caractéristiques un grand diamètre et une courte distance focale, ce qui permet d'obtenir plusieurs angles d'incidence, donc d'injecter plusieurs modes lumineux simultanément à l'intérieur de la marque 2. Le faisceau de lumière incident L, ainsi dirigé sur le prisme 4, est focalisé sur un point de couplage optique P.

La mâchoire 9 de la branche "mobile" de la pince porte, en regard de la première mâchoire 7 et plus particulièrement en face du point de couplage P, un doigt de couplage 17, prévu pour être appliqué sous le support 3, lorsque la marque 2 est introduite entre les deux mâchoires 7 et 9.

Le dispositif de lecture 5 comprend encore, vers l'extrémité de la mâchoire 7, un détecteur 18 réalisé sous la forme d'un écran, visible de l'extérieur - voir aussi la figure 2. Le détecteur 18 est disposé de manière à être atteint par le faisceau réfléchi R, sortant du prisme 4.

Pour l'utilisation du dispositif de lecture 5, l'ensemble constitué par la marque 2 et son support 3 est engagé entre les deux mâchoires 7 et 9 de la pince et, par une action manuelle de serrage des poignées 6 et 8, qui presse le doigt du couplage 17 contre le support 3, l'on obtient le couplage optique désiré entre le prisme 4 et la marque 2, avec l'intervalle d'air optimum à l'interface prisme 4/marque 2. La source de lumière 11 étant activée, les modes peuvent être injectés depuis le prisme 4 vers la marque 2, selon le principe de la réflexion frustrée. La partie réfléchie sur la marque 2 sort du prisme 4 et va sur le détecteur 18. L'absence d'un mode propre dans le faisceau réfléchi R se traduit, sur le détecteur 18, par une variation de contraste, telle qu'une ligne noire 19 sur un fond clair 20 (voir figure 2), ou le contraire. Cette variation, qu'il est possible d'analyser en largeur, intensité et autres caractéristiques, liées à la marque 2, constitue le signal de succès de l'analyse de la marque 2.

Le système, précédemment décrit, est particulièrement destiné à la reconnaissance d'objets et de documents, ainsi qu'à leur authentification en vue de les protéger de la fraude et de la contrefaçon.

On notera que les miroirs, nécessaires dans l'exemple illustré pour guider la lumière, du fait de la conformation du dispositif de lecture et de la faible place disponible à l'intérieur, peuvent être supprimés dans le cas d'un appareil dans lequel la source lumineuse pourrait être alignée avec les lentilles. Il serait aussi possible de remplacer les miroirs par des fibres optiques, pour acheminer la lumière vers la lentille convergente qui précède le prisme. Dans le même ordre d'idées, le détecteur peut être de tout type adapté. Le dispositif de lecture peut aussi être adapté à des objets particuliers.

## Revendications

1. Système de marquage et d'identification optique, comprenant une marque (2) apposée sur un objet ou un document, ou une marque constituée par tout ou partie de l'objet lui-même , et un dispositif de lecture (5) permettant de reconnaître ladite marque (2), **caractérisé en ce que** la marque (2) est composée de matériaux capables de propager la lumière, cette marque étant transparente ou semi-transparente à une longueur d'onde donnée, et ladite marque (2) présentant un état de surface et une microstructure permettant un couplage optique avec ledit dispositif de lecture (5) comprenant au moins une source de lumière monochromatique ou non (11), des moyens optiques (13 à 16) pour diriger et/ou acheminer ladite lumière (L) sur un prisme (4), et un détecteur (18) apte à recevoir la lumière renvoyée (R), lorsque le prisme (4) est en couplage optique avec la marque (2), avec effet de réflexion frustrée.

2. Système selon la revendication 1, **caractérisé en ce que** la marque (2) est continue et uniforme, au moins sur une partie de son étendue.

3. Système selon la revendication 1 ou 2, **caractérisé en ce que** la marque (2) présente au moins une discontinuité locale.

4. Système selon l'une quelconque des revendications 1 à 3, **caractérisé en ce que** la marque (2) est transparente dans le visible, de manière à ne pas masquer le support (3) de cette marque (2).

5. Système selon l'une quelconque des revendications 1 à 4, **caractérisé en ce que** la marque (2) contient un matériau tel que colorant ou luminophore, ou autre agent pouvant en modifier l'aspect et/ou entrer dans la détection.

6. Système selon l'une quelconque des revendications 1 à 5, **caractérisé en ce que** la marque (2) est modifiable localement, de manière réversible ou irréversible, notamment par voie chimique, physique ou mécanique, en ce qui concerne les propriétés optiques du matériau de la marque.

7. Système selon l'une quelconque des revendications 1 à 6, **caractérisé en ce que** la marque (2) est recouverte d'une couche protectrice et/ou servant de leurre, pouvant être ôtée avant lecture.

8. Système selon l'une quelconque des revendications 1 à 7, **caractérisé en ce que** la marque (2) est constituée d'un empilement de couches.

9. Système selon l'une quelconque des revendications 1 à 8, **caractérisé en ce que** la marque (2) est réalisée sous la forme d'une couche mince, déposée ou fixée sur l'objet ou document à marquer.

10. Système selon l'une quelconque des revendications 1 à 8, **caractérisé en ce que** la marque (2) est réalisée sous la forme d'un film auto-supporté.

11. Système selon l'une quelconque des revendications 1 à 10, **caractérisé en ce que** la marque (2) est déposée sur une sous-couche de préparation.

12. Système selon l'une quelconque des revendications 1 à 7, **caractérisé en ce que** la marque (2) est massive, et peut être constituée par l'objet à marquer lui-même.

13. Système selon l'une quelconque des revendications 1 à 12, **caractérisé en ce que** la marque (2) est reproductible à l'identique, sur un grand nombre d'objets ou de documents.

14. Système selon l'une quelconque des revendications 1 à 12, **caractérisé en ce que** la marque (2) est unique, et caractérise ainsi un seul objet ou document.

15. Système selon l'une quelconque des revendications 1 à 14, **caractérisé en ce que** le dispositif de lecture (5) de la marque (2) comprend, en combinaison :
- au moins une source de lumière (11), apte à délivrer un faisceau de lumière (L) polarisée ou non,
- un prisme (4), d'indice de réfraction supérieur à celui de la marque (2), venant en couplage optique avec la marque (2), en un point (P) donné,
- des moyens optiques (13 à 16) pour diriger et/ou acheminer le faisceau de lumière (L) sur le prisme (4), au point de couplage optique (P),
- un détecteur (18) placé pour recevoir la lumière réfléchie (R) après couplage avec la marque (2).

16. Système selon la revendication 15, **caractérisé en ce que** la ou chaque source de lumière est une source monochromatique (11), telle que laser ou diode laser, délivrant directement le faisceau de lumière monochromatique (L).

17. Système selon la revendication 15, **caractérisé en ce que** la ou chaque source de lumière (11) est une source quasi-monochromatique ou polychromatique.

18. Système selon l'une quelconque des revendications 15 à 17, **caractérisé en ce que** les moyens optiques comprennent des lentilles (15, 16), dont au moins une lentille convergente (16) précédant le prisme (4), et éventuellement un système de miroirs (13, 14).

19. Système selon l'une quelconque des revendications 15 à 18, **caractérisé en ce que** le détecteur (18) est couplé à des moyens électroniques d'acquisition, de traitement et de mémorisation du signal reçu.

20. Système selon la revendication 19, **caractérisé en ce que** lesdits moyens électroniques sont prévus pour analyser, à partir de la lumière renvoyée (R) après contact avec la marque (2), un ou plusieurs parmi les paramètres suivants : indice de la marque, épaisseur de la marque, nombre et/ou espacement et/ou positions et/ou largeur des lignes noires ou blanches (19) sur le détecteur (18), position de la fréquence de coupure, intensité lumineuse moyenne reçue par le détecteur (18), indice moyen et/ou épaisseur moyenne dans le cas d'une marque multicouches, lignes supplémentaires en cas de présence de luminophores dans la marque (2).

21. Système selon la revendication 19 ou 20, **caractérisé en ce que**, dans le cas d'un faisceau de lumière (L) polarisée, lesdits moyens électroniques sont prévus pour analyser chaque mode de lumière selon sa polarisation.

22. Système selon l'une quelconque des revendications 1 à 21, **caractérisé en ce que** la nature de la source de lumière (11), et/ou la nature et/ou la forme géométrique du prisme (4), et/ou d'autres caractéristiques du dispositif de lecture (5), sont utilisées comme paramètres de sécurité du système.

23. Système selon l'une quelconque des revendications 1 à 22, **caractérisé en ce que** le dispositif de lecture (5) de la marque (2) est un dispositif portable, conformé en pince dont une mâchoire (7) comporte le prisme (4) et dont l'autre mâchoire (9) comporte, en regard du prisme (4), un élément (17) permettant le couplage optique entre la marque (2) à analyser, introduite entre les deux mâchoires (7, 9) de la pince, et ledit prisme (4).

24. Système selon l'une quelconque des revendications 1 à 22, **caractérisé en ce que** le dispositif de lecture (5) de la marque (2) est un dispositif portable, de forme allongée, dont une extrémité est pourvue du prisme (4) et est prévue pour être appliquée sur la marque (2) à analyser.

25. Système selon l'une quelconque des revendications 1 à 22, **caractérisé en ce que** le dispositif de lecture (5) de la marque (2) est un appareil fixe ou semi-mobile, dans lequel la marque (2) à analyser est introduite, des moyens pouvant être prévus dans cet appareil pour un couplage optique automatique entre le prisme (4) et cette marque (2).

## Claims

1. An optical marking and identification system, comprising a mark (2) affixed to an object or a document, or a mark formed by all or part of the object itself, and a read device (5) for recognizing said mark (2), **characterized in that** the mark (2) is composed of materials that are capable of propagating light, this mark being transparent or semitransparent at a given wavelength, and said mark (2) having a surface finish and a microstructure that allow optical coupling with said read device (5) that comprises at least one source (11) of monochromatic or nonmonochromatic light, optical means (13, 16) for directing and/or conveying said light (L) onto a prism (4), and a detector (18) able to receive the reflected light (R) , when the prism (4) is optically coupled with the mark (2) with a frustrated reflection effect.

2. The system as claimed in claim 1, **characterized in that** the mark (2) is continuous and uniform, at least over part of its area.

3. The system as claimed in claim 1 or 2, **characterized in that** the mark (2) has at least one local discontinuity.

4. The system as claimed in any one of clams 1 to 3, **characterized in that** the mark (2) is transparent in the visible, so as not to mask the medium (3) for this mark (2).

5. The system as claimed in any one of claims 1 to 4, **characterized in that** the mark (2) contains a material such as a dye or phosphor, or another agent able to modify the appearance thereof and/or to be involved in the detection process.

6. The system as claimed in any one of claims 1 to 5, **characterized in that** the mark (2) is locally modifiable, reversibly or irreversibly, especially by chemical, physical or mechanical means, as regards the optical properties of the material of the mark.

7. The system as claimed in any one of claims 1 to 6, **characterized in that** the mark (2) is covered with a protective and/or decoy-acting layer, that can be removed before reading.

8. The system as claimed in any one of claims 1 to 7, **characterized in that** the mark (2) is formed by a multilayer.

9. The system as claimed in any one of claims 1 to 8, **characterized in that** the mark (2) is made in the form of a thin layer deposited on or fixed to the abject or document to be marked.

10. The system as claimed in any one of claims 1 to 8, **characterized in that** the mark (2) is made in the form of a self-supporting film.

11. The system as claimed in any one of claims 1 to 10, **characterized in that** the mark (2) is deposited on a preparatory underlayer.

12. The system as claimed in any one of claims 1 to 7, **characterized in that** the mark (2) has some bulk and may be formed by the object to be marked itself.

13. The system as claimed in any one of claims 1 to 12, **characterized in that** the mark (2) is identically reproducible on a large number of objects or documents.

14. The system as claimed in any one of claims 1 to 12, **characterized in that** the mark (2) is unique and thus characterizes only a single object or document.

15. The system as claimed in any one of claims 1 to 14, **characterized in that** the device (5) for reading the mark (2) comprises, in combination:
- at least one light source (11) able to deliver a beam of polarized or unpolarized light (L);
- a prism (4), having a refractive index greater than that of the mark (2) , optically coupling with the mark (2) at a given point (P);
- optical means (13 to 16) for directing and/or conveying the beam of light (L) onto the prism (4) at the optical coupling point (P) ; and
- a detector (18) placed so as to receive the reflected light (R) after coupling with the mark (2).

16. The system as claimed in claim 15, **characterized in that** the or each light source is a monochromatic source (11), such as a laser or laser diode, delivering the beam of monochromatic light (L) directly.

17. The system as claimed in claim 15, **characterized in that** the or each light source (11) is a quasi monochromatic or polychromatic source.

18. The system as claimed in any one of claims 15 to 17, **characterized in that** the optical means comprise lenses (15, 16), at least one of which is a convergent lens (16) placed in front of the prism (4), and possibly a system of mirrors (13,14).

19. The system as claimed in any one of claims 15 to 18, **characterized in that** the detector (18) is coupled to electronic means for the acquisition, processing and storage of the signal received.

20. The system as claimed in claim 19, **characterized in that** said electronic means are designed to analyze, on the basis of the reflected light (R) after contact with the mark (2), one or more of the following parameters: the index of the mark, the thickness of the mark, the number and/or spacing and/or positions and/or width of the black or white lines (19) on the detector (18), the position of the cutoff frequency, the mean light intensity received by the detector (18), the mean index and/or the mean thickness in the case of a multilayer mark, and the additional lines when phosphors are present in the mark (2).

21. The system as claimed in claim 19 or 20, **characterized in that**, in the case of a beam of polarized light (L), said electronic means are designed to analyze each light mode according to its polarization.

22. The system as claimed in any one of claims 1 to 21, **characterized in that** the nature of the light source (11) and/or the nature and/or the geometrical shape of the prism (4) and/or of other features of the read device (5) are used as security parameters of the system.

23. The system as claimed in any one of claims 1 to 22, **characterized in that** the device (5) for reading the mark (2) is a portable device in the form of pincers, one jaw (7) of which includes the prism (4) and the other jaw (9) of which includes, opposite the prism (4), an element (17) that allows optical coupling between the mark (2) to be analyzed, said mark being introduced between the two jaws (7, 9) of the pincers, and said prism (4).

24. The system as claimed in any one of claims 1 to 22, **characterized in that** the device (5) for reading the mark (2) is a portable device of elongate shape, one end of which is provided with the prism (4) and is designed to be applied against the mark (2) to be analyzed.

25. The system as claimed in any one of claims 1 to 22, **characterized in that** the device (5) for reading the mark (2) is a stationary or semi-movable apparatus into which the mark (2) to be analyzed is introduced, it being possible for means to be provided in this apparatus for automatic optical coupling between the prism (4) and this mark (2).

## Patentansprüche

1. Optisches Identifizierungs- und Markierungssystem, das umfasst: eine Markierung (2), die auf einem Objekt oder einem Dokument angebracht ist, oder eine Markierung, die ganz oder teilweise aus dem Objekt selbst besteht, sowie eine Lesevorrichtung (5), die das Erkennen dieser Markierung erlaubt, **dadurch gekennzeichnet, dass** die Markierung (2) aus Materialien besteht, die fähig sind, das Licht weiterzuleiten, wobei diese Markierung bei gegebener Wellenlänge transparent oder halbtransparent ist, und wobei diese Markierung (2) einen Oberflächenzustand und eine Mikrostruktur aufweist, die eine optische Kopplung mit einer Lesevorrichtung (5) erlaubt, die mindestens eine Quelle (11) für monochromatisches oder nicht-monochromatisches Licht, optische Mittel (13 bis 16) zur Ausrichtung und/oder Leitung dieses Lichts (L) zu einem Prisma (4) sowie einen Detektor (18) umfasst, der das reflektierte Licht (R) in rauher Reflexion empfangen kann, wenn das Prisma (4) mit der Markierung (2) optisch gekoppelt ist.

2. System nach Anspruch 1, **dadurch gekennzeichnet, dass** die Markierung (2) mindestens auf einem Teil ihrer Ausdehnung kontinuierlich und gleichförmig ist.

3. System nach Anspruch 1 oder 2, **dadurch gekennzeichnet, dass** die Markierung (2) mindestens eine lokale Diskontinuität aufweist.

4. System nach einem der Ansprüche 1 bis 3, **dadurch gekennzeichnet, dass** die Markierung (2) im Sichtbaren transparent ist, so dass der Träger (3) dieser Markierung (2) nicht maskiert wird.

5. System nach einem der Ansprüche 1 bis 4, **dadurch gekennzeichnet, dass** die Markierung (2) einen Stoff enthält, wie etwa einen Farbstoff oder einen Leuchtstoff oder eine andere Substanz, die deren Aussehen verändern und/oder bei der Detektion mitwirken kann.

6. System nach einem der Ansprüche 1 bis 5, **dadurch gekennzeichnet, dass** die Markierung (2) bezüglich der optischen Eigenschaften des Werkstoffs der Markierung lokal in reversibler oder irreversibler Weise veränderbar ist, insbesondere auf chemischem, physikalischem oder mechanischem Wege.

7. System nach einem der Ansprüche 1 bis 6, **dadurch gekennzeichnet, dass** die Markierung (2) von einer Schicht bedeckt ist, die als Schutz und/oder als Target dient und vor dem Lesen abgezogen werden kann.

8. System nach einem der Ansprüche 1 bis 7, **dadurch gekennzeichnet, dass** die Markierung (2) aus übereinander gelegten Schichten gebildet ist.

9. System nach einem der Ansprüche 1 bis 8, **dadurch gekennzeichnet, dass** die Markierung (2) in Form einer dünnen Schicht hergestellt ist, die auf dem zu markierenden Objekt oder Dokument aufgelegt oder befestigt wird.

10. System nach einem der Ansprüche 1 bis 8, **dadurch gekennzeichnet, dass** die Markierung (2) in Form einer selbsthaftenden Folie hergestellt ist.

11. System nach einem der Ansprüche 1 bis 10, **dadurch gekennzeichnet, dass** die Markierung (2) auf einer Vorbehandlungs-Unterschicht aufgebracht wird.

12. System nach einem der Ansprüche 1 bis 7, **dadurch gekennzeichnet, dass** die Markierung (2) massiv ist und aus dem zu markierenden Objekt selbst bestehen kann.

13. System nach einem der Ansprüche 1 bis 12, **dadurch gekennzeichnet, dass** die Markierung (2) auf einer großen Anzahl von Objekten oder Dokumenten identisch reproduzierbar ist.

14. System nach einem der Ansprüche 1 bis 12, **dadurch gekennzeichnet, dass** die Markierung (2) einzigartig ist und somit nur ein einziges Objekt oder Dokument kennzeichnet.

15. System nach einem der Ansprüche 1 bis 14, **dadurch gekennzeichnet, dass** die Lesevorrichtung (5) der Markierung (2) in Kombination folgendes umfasst:
- mindestens eine Lichtquelle (11), die ein Bündel polarisierten oder nichtpolarisierten Lichts (L) abgeben kann,
- ein Prisma (4) mit einem höheren Brechungsindex als demjenigen der Markierung (2), das an einem gegebenen Punkt (P) mit der Markierung (2) optisch gekoppelt wird,
- optische Mittel (13 bis 16), um das Lichtbündel (L) am optischen Kopplungspunkt (P) auf das Prisma (4) auszurichten und/oder hinzuleiten,
- einen Detektor (18), der so angeordnet ist, dass er das nach der Kopplung mit der Markierung (2) reflektierte Licht (R) empfangen kann.

16. System nach Anspruch 15, **dadurch gekennzeichnet, dass** die oder jede Lichtquelle eine monochromatische Quelle (11) ist, wie etwa Laser oder Laserdiode, die das monochromatische Lichtbündel (L) direkt liefert.

17. System nach Anspruch 15, **dadurch gekennzeichnet, dass** die oder jede Lichtquelle (11) eine quasi-monochromatische oder polychromatische Lichtquelle ist.

18. System nach einem der Ansprüche 15 bis 17, **dadurch gekennzeichnet, dass** die optischen Mittel Linsen umfassen (15, 16), darunter mindestens eine dem Prisma (4) vorgeschaltete Sammellinse (16) und eventuell ein System von Spiegeln (13, 14).

19. System nach einem der Ansprüche 15 bis 18, **dadurch gekennzeichnet, dass** der Detektor (18) an elektronische Vorrichtungen zur Erfassung, Verarbeitung und Speicherung des empfangenen Signals angeschlossen ist.

20. System nach Anspruch 9, **dadurch gekennzeichnet, dass** diese elektronischen Vorrichtungen vorgesehen sind, um, ausgehend von dem nach Kontakt mit der Markierung (2) reflektierten Licht (R), einen oder mehrere der folgenden Parameter zu analysieren: Brechungsindex der Markierung (2), Dicke der Markierung, Anzahl und/oder Abstand und/oder Positionen und/oder Breite der schwarzen oder weißen Streifen (19) auf dem Detektor (18), die Position der Grenzfrequenz, die vom Detektor (18) empfangene mittlere Lichtintensität, den mittleren Brechungsindex und/oder die mittlere Dicke im Fall einer mehrschichtigen Markierung, die zusätzlichen Streifen im Fall des Vorhandenseins von Leuchtstoffen in der Markierung (2).

21. System nach Anspruch 19 oder 20, **dadurch gekennzeichnet, dass** im Fall eines polarisierten Lichtbündels (L) diese elektronischen Vorrichtungen vorgesehen sind, um jede Lichtmode gemäß ihrer Polarisierung zu analysieren.

22. System nach einem der Ansprüche 1 bis 21, **dadurch gekennzeichnet, dass** die Beschaffenheit der Lichtquelle (11) und/oder die Beschaffenheit und/oder die geometrische Form des Prismas (4) und/oder andere Kennzeichen der Lesevorrichtung (5) als Sicherungsparameter des Systems verwendet werden.

23. System nach einem der Ansprüche 1 bis 22, **dadurch gekennzeichnet, dass** die Lesevorrichtung (5) der Markierung (2) eine tragbare Vorrichtung ist, die die Form einer Zange hat, bei der ein Schenkel (7) das Prisma (4) trägt und der andere Schenkel (9) gegenüber dem Prisma (4) ein Element (17) umfasst, das die optische Kopplung zwischen der zu analysierenden Markierung (2), die zwischen den zwei Schenkeln (7, 9) der Zangenform eingeführt wird, und dem Prisma (4) ermöglicht.

24. System nach einem der Ansprüche 1 bis 22, **dadurch gekennzeichnet, dass** die Lesevorrichtung (5) der Markierung (2) eine tragbare Vorrichtung länglicher Form ist, bei der ein Ende mit dem Prisma (4) ausgestattet ist und vorgesehen ist, um an die zu analysierende Markierung (2) angelegt zu werden.

25. System nach einem der Ansprüche 1 bis 22, **dadurch gekennzeichnet, dass** die Lesevorrichtung (5) der Markierung (2) ein feststehendes oder halb-bewegliches Gerät ist, in das die zu analysierende Markierung (2) eingeführt wird, wobei in diesem Gerät Mittel für eine automatische optische Kopplung zwischen dem Prisma (4) und dieser Markierung (2) vorgesehen sein können.
